# EUROPÄISCHE PATENTSCHRIFT

(11) **EP 0 173 931 B1**
(45) Veröffentlichungstag und Bekanntmachung des Hinweises auf die Patenterteilung: **19.05.1993**
(21) Anmeldenummer: 85110639.3
(22) Anmeldetag: 23.08.1985
(51) Int. Cl.: G06F 11/00, G02F 1/13, G09G 3/18

(54) **Verfahren und Schaltungsanordnung zur Anzeige einer fehlerhaften Funktionsweise einer Flüssigkristallanzeige**
Method and circuit arrangement to display an erroneously functioning liquid crystal display
Méthode et agencement de circuit pour l'affichage d'un fonctionnement erroné d'un affichage à cristal liquide

(30) Priorität: 01.09.1984 DE 3432247
(43) Veröffentlichungstag der Anmeldung: 12.03.1986
(73) Patentinhaber: Mannesmann Kienzle GmbH (HR B1220), 78052 Villingen-Schwenningen (DE)
(72) Erfinder: Adams, Jürgen, D-7730 Villingen-Schwenningen (DE)

(56) Entgegenhaltungen:
- EP-A- 0 135 331
- US-A- 3 585 629
- US-A- 4 301 450

## Beschreibung

Die Erfindung betrifft ein Verfahren und eine Schaltungsanordnung zur Anzeige einer fehlerhaften Funktionsweise von Segment-, Segmentgruppen- und Rückelektroden-Zuleitungen an Standard-Flüssigkristall-Anzeigen (LCD's) für eine statische oder gemultiplexte Betriebsweise zur Darstellung von Ziffern oder Zeichen über die Aktivierung einer Anzahl getrennt ansteuerbarer Segmente, wobei an alle LCD-Elektroden ein redundant zugeführtes Kontrollsignal angelegt ist.

Im Bereich der elektro-optischen Anzeigemittel nimmt die Flüssigkristallanzeige (LCD = Liquid Crystal Display) mit zunehmend verbessertem Entwicklungsgrad immer mehr Raum ein. Ein typischer Anwendungsfall ist beispielsweise die 7-Segment-Ziffernanzeige als LC-Anzeigebaustein für die Darstellung von Ziffern. Der Grundaufbau einer Flüssigkristallanzeige besteht bekanntlich darin, daß zwei Glasplatten an den einander zugekehrten Flächen mit lichtdurchlässigen, leitenden Schichten bedeckt sind und ein Zwischenraum zwischen den Platten eine nematische kristalline Flüssigkeit enthält, die beim Anlegen einer Spannung an die Dünnschichtelektroden unter dem Einfluß des elektrischen Feldes Zonen mit verschiedenem Brechungsindex bilden. Je nach Ausbildung der Struktur der einen lichtdurchlässigen Elektrode läßt sich die Flüssigkristallzelle zur Darstellung von Ziffern, Buchstaben oder sonstigen Informationszeichen verwenden. Entsprechend der Anwendung können durch eine unterschiedliche Anordnung von Reflektoren reflektive (Auflicht-), transmissive (Durchlicht-) oder transflektive (Durch- oder Auflicht-) Ausführungsformen gebildet werden. Die als passives Display bezeichnete Flüssigkristallanzeige unterscheidet sich von aktive Displays, wie beispielsweise LED-Anzeigen, grundsätzlich dadurch, daß sie kein eigenes Licht erzeugt, sondern lediglich Fremdlicht moduliert. Als besonders vorteilhaft zu bezeichnen ist bei Flüssigkristallanzeigen unter anderem die sehr geringe Stromaufnahme. Die sehr geringe Stromaufnahme der Flüssigkristallanzeige hat aber zur Folge, daß eine Segmentkontrolle praktisch nicht möglich ist. Während bei aktiven Displays, so beispielsweise bei LED-Anzeigen, eine Kontrolle der Darstellung der Informationen insofern einfach ist, daß man die einzelnen Segmentströme mißt und rückwirkend mit der angebotenen Information vergleicht und daraus erforderlichenfalls ein Fehlersignal ableitet, führt eine gleichermaßen angewandte Segmentkontrolle bei passiven Anzeigen, wie die Flüssigkristallanzeigen, zu keinem brauchbaren Ergebnis. Schuld daran sind die sehr viel geringeren und relativ stark streuenden Segmentströme.

Zur Schaffung einer erhöhten Sicherheit in der Zeichendarstellung hat man die Möglichkeit einer redundanten Darstellung, wie aus der DE-OS 24 02 749 bekannt ist, oder als Maßnahme der Sicherung der Anzeige eine weitergehende Segmentierung der einzelnen Zeichensymbole (DE-OS 24 59 488) in Erwägung gezogen. Diese Maßnahmen bringen jedoch wiederum einen ganz erheblichen Herstellungs- und Schaltungsaufwand mit sich. Um diesem unbefriedigenden Zustand bei Flüssigkristall-Displays zu begegnen, wird gemäß den Darlegungen aus der DE-OS 27 43 907 vorgeschlagen, daß die Vorderplatte zusätzliche Elektroden (Kontrollelektroden) trägt, die jeweils mit einer derjenigen Segmentelektroden ("gefährdete Segmentelektroden") elektrisch verbunden sind, bei deren Ausfall oder Fehlansteuerung ein anderes mögliches Zeichen aus dem Zeichenvorrat des Displays dargestellt wird und daß die Rückplatte eine Rückelektrode ("Kontroll-Rückelektrode") enthält, die nur den Kontrollelektroden gegenüberliegt. Diese Maßnahme bedeutet jedoch, daß praktisch alle sog. gefährdeten Segmentelektroden, das sind bei einer 7-Segment-Ziffernanzeige wenigstens fünf Segmentelektroden, zusätzlich jeweils mit einer Kontrollelektrode verbunden sind und daß auch die Rückplatte des Displays eine zusätzliche Kontroll-Rückelektrode enthält, die ausschließlich mit den Kontrollelektroden zusammenwirkt. Außer den sonst üblichen 7-Segment-Elektroden und einer Rückelektrode sind für den vorgeschlagenen Kontrollgang zusätzlich fünf Kontrollelektroden und eine Kontroll-Rückelektrode vorzusehen und auf der Trägerplatte unterzubringen. Dieser Aufwand ist erheblich und bringt aufgrund der großen Anzahl der getrennt geführten elektrischen Verbindungen eine entsprechend große Fehlerquelle für die Kontaktierung mit sich. Darüber hinaus stellt diese Ausführungsform eine aufwendige Sonderausführung dar, und es wird für LC-Displays der herkömmlichen Art dadurch keine Anzeigekontrollmöglichkeit bereitgestellt.

Andere bekannte Lösungen (DE-OS 30 26 848 und DE-OS 29 51 584) versuchen eine Fehlerinterpretation über Segmentelektroden und Rückelektroden-Anordnungen zu realisieren. So ist bei der Anordnung nach DE-OS 30 26 848 jede Segmentelektrode über eine erste Leiterbahn mit der Treiberschaltung zur regulären Ansteuerung verbunden, und gleichzeitig wird über die Verbindung über eine zweite Leiterbahn für jede Segmentansteuerung eine eigene Stromschleife gebildet. Ein Prüfkondensator in jeder stromschleife wird bei der Ansteuerung des betreffenden Segmentes im Multiplex-Verfahren geladen und entladen. In einer für alle prüfbaren Segmentanschlüsse gleichen Entladestromschleife ist ein Widerstand vorgesehen, an welchem ein durch den Entladestrom auslösbarer Spannungsabfall meßbar ist.

Bei der Lösung nach der DE-OS 29 51 584 wird das von der Ansteuerleitung an die Segmentelektrode geführte Steuersignal über eine elektrisch anisotrope Widerstandsschicht auf eine zweite, getrennte Leiterbahn übernommen und als Kontrollsignal einer Überwachungselektronik zugeführt. Bei den zwei zuletzt genannten Überwachungsschaltungen muß schließlich in einer Fehlermeldeeinrichutng eine Fehleranzeige initiiert werden.

In der Patentschrift US-A-4 301 450 ist eine Kontrolleinrichtung für Segmentanzeigen dargestellt, die im Prinzip davon ausgeht, daß sich bei einer intakten Anzeige alle Segmente erkennbar aktiv zeigen, also auch jene Segmente, die zur Darstellung einer Zahl nicht aktiviert sein sollen. Die zur Darstellung einer Zahl nicht angesteuerten Segmente erscheinen mit einem abgeschwächten Restkontrast, der für den Betrachter signalisieren soll, daß auch die nicht aktivierten Segmente funktionsfähig sind. Die Notwendigkeit einer Unterscheidung zwischen den unterschiedlichen Kontrasten der Segmente und dem Fehlen eines Segments im Fehlerfall erschwert für den Betrachter eine korrekte Ablesung der tatsächlich angesteuerten Zahl bzw. macht den Fehlerfall nur schwer erkennbar.

Ein weiteres Dokument gemäß der EP-A-0 135 331 zeigt eine Kontrolleinrichtung mit einer aktiven Teilnahme des steuernden Mikroprozessors. Bei dem hierin gezeigten Verfahren mit ausschließlicher Wirkung in der Speicher- und Ansteuerschaltung wird das Nutzsignal verändert dergestalt, daß das Nutzsignal indirekt mittels Mikroprozessor invertiert werden muß, zyklisch und synchron zum Steuer- bzw. Kontrollsignal. Eine Kontrolle in bezug auf Störungen in den Zuleitungen findet bei dieser bekannten Lösung also nicht statt, denn im Fehlerfall blinkt das Segment mit der Frequenz des Steuersignals, korrespondierend mit den defekten Speicherzellen oder der defekten Ansteuerschaltung.

Zusammenfassend kommt man zu dem Ergebnis: Standard-LCD's sind aus den dargelegten Gründen nicht oder nur sehr schwer durch die Kontrolle von Ansteuerstrom- bzw. Ansteuerleistung überwachbar. Aus diesem Grunde sind zur Lösung der gestellten Kontrollforderungen Verfahren bekannt geworden, die sich auf die Schaffung einer hohen Hamming-Distanz beziehen (Punkt-Matrix), oder Redundanz durch Doppelsegemente schaffen bzw. durch Segment-Elektroden und Rückelektroden-Anordnungen in Verbindung mit einem Multiplex-System, die im Störfall fehlinterpretierbare Segmentkombinationen verhindern soll.

Analysiert man die Fehlerquellen und deren Auswirkungen auf ein LC-Anzeigesystem, so lassen sich die eigentlichen Fehlerquellen lokalisieren auf Ursachen, die abgrenzbar im Bereich des Anzeigeelementes oder aber davor im Bereich der Ansteuerung liegen. Fehler am Display-Baustein, wie undichte Mediumzelle durch Alterung, Über- oder Unterschreitung der zulässigen Betriebstemperaturbereiche, Glasbruch, defekte Polarisatoren und dergl., wirken sich in der Regel auf alle Segmente bzw. auf den gesamten Anzeigebaustein aus. Insofern ist eine derart schadhafte Erscheinung unmittelbar optisch erkennbar.

Nicht augenscheinliche Anzeigefehler sind als solche vom Betrachter nicht erkennbar. Sie entstehen in der Regel im Ansteuerungsbereich, wenn beispielsweise durch Unterbrechungen von Signalleitungen, fehlerhafte Kontaktierung zum Anzeigebaustein, defekte Leiterbahnen im Laufe des Anzeigebetriebes einzelne Segmente ausfallen oder fälschlicherweise aktiviert werden. Es können dabei zeitweise oder dauernd falsch interpretierbare Anzeigesegment-Konfigurationen entstehen, d. h. aus einer "8" kann durch Fehlen eines Segmentes beispielsweise eine "9" oder eine "0" entstehen, ohne erkennbare Ursache für eine Signalunterbrechung zu dem entsprechenden Segment. Es besteht daher eine unabdingbare Forderung nach Mittel, insbesondere für die behördliche Zulassung von eichfähigen Geräten, wie Taxameter, Preisrechner für Zapfsäulen, Fernübertragungsanlagen und dergl., die augenscheinlich nicht wahrnehmbaren Fehlanzeigen zu erkennen und anzuzeigen vermögen.

Aufgabe der Erfindung ist es, ein Kontrollverfahren und Mittel zur Realisierung einer permanenten, visuellen Kontrollierbarkeit von Standard-LCD's zu schaffen, welche sich aufgrund einer geringen Ansteuerleistung einer autonomen Anzeigekontrolle entziehen.

Die Lösung besteht in einem Verfahren zur Anzeige einer fehlerhaften Funktionsweise von Segment-, Segmentgruppen- und Rückelektroden-Zuleitungen, welches dadurch gekennzeichnet ist, daß eine Führung des Kontrollsignals über erste Positionen (7, 8, 9, 10) an Display-Kontakte ohne Unterscheidung auf Segmentanschluß oder Rückelektrodenanschluß im Gegensatz zur Anlegung von Nutzsignalen über zweite Positionen (4, 3, 6) an die Display-Kontakte um den Faktor 5 bis 100 hochohmiger ist, daß als Form des Kontrollsignals eine Dreieck-, Sinus- oder e-Funktionsform gewählt wird, welche unter allen vorkommenden Signalgegebenheiten an durch Störungen in den Zuleitungen betroffenen Segmenten oder Segmentgruppen eine Kontrastbildung herbeiführt, und daß das Kontrollsignal an Segment- und Rückelektroden angelegte Nutzsignale überlagert, derart daß im Falle einer Unterbrechung des Nutzsignals das Kontrollsignal an den betroffenen LCD-Elektroden wirksam wird, wodurch in der Folge das betroffene Segment oder die betroffene Segmentgruppe blinkt als wahrnehmbares Zeichen eines Störfalles.

Die Lösung zur Realisierung des Verfahrens besteht in einer Schaltungsanordnung, die dadurch gekennzeichnet ist, daß für das Anlegen eines separaten Kontrollsignals eine gegenüber dem Anlegen der Nutzsignale über zweite Positionen (4, 3, 6) an die Display-Kontakte um den Faktor 5 bis 100 hochohmigere Zuleitung über erste Positionen (7, 8, 9, 10) vorgesehen ist, die gemeinsam an alle LCD-Elektroden ohne Unterscheidung auf Segmentanschluß oder

Rückelektrodenanschluß geführt ist und in der vorzugsweise ein hochohmiger, homogen leitender Verbinder vorgesehen ist zur Signalführung des redundant zugeführten Kontrollsignals.

Merkmale für die weitere Ausgestalung eines Ausführungsbeispieles sind in den Unteransprüchen angegeben.

Durch die beschriebene Anordnung ist eine LC-Anzeige während des Betriebszustandes permanent visuell kontrollierbar. Fällt beispielsweise durch Unterbrechung einer Signalleitung zeitweise oder dauernd die Ansteuerung eines Segmentes aus, wodurch eine falsch interpretierbare Anzeigesegment-Konfiguration entsteht, ohne eine sonstwie erkennbare Signalunterbrechung zu eben diesem fehlenden Segment, so führt eine Kontrollsignal-Überlagerung dazu, daß das fehlerhafte Segment blinkt. Der irreguläre Signalzustand an diesem Segment ist so offensichtlich erkennbar. Auf vergleichbare Weise reagiert eine Segmentgruppe einer LC-Anzeige, welche beim Multiplex-Verfahren betrieben wird, durch die Anwendung des bezeichneten Verfahrens. Hier blinkt dann die Segment-Gruppe und wechselt das Zahlenbild beispielsweise von "7" auf "8". Die fehlerhaften Segmente oder Segment-Gruppen blinken mit der doppelten Frequenz der Kontrollsignalfrequenz.

Bei einem Ausfall des Rückelektroden-Signals blinkt die gesamte Segmentkonfiguration der betroffenen Stelle (bei statischem Ansteuerungsverfahren).

Bei Ausfall eines oder mehrerer Rückelektroden-Signale in Multiplex-Systemen blinken dann die Segmente, welche der gestörten Rückelektrode zugeordnet sind.

Ein Ausführungsbeispiel der Erfindung ist nachfolgend beschrieben und in Zeichnungen dargestellt.

Es zeigt
FIG. 1 einen schematischen Aufbau einer LCD-Zelle mit den Signalzuführungsleitungen im Schnitt für eine Nutzsignal- und eine Kontrollsignal-Zufuhr von einer Leiterplatte an das Segment,
FIG. 2 eine Draufsicht auf die Leiterplatte gemäß FIG. 1 mit einer Anordnung der Leiterbahnen für die Nutzsignalzufuhr und die Kontrollsignal-zufuhr,
FIG. 3 eine Ersatzschaltung für die Ansteuerung einer Segmentkonfiguration für Ziffern mit Nutzsignalen und Kontrollsignalen einschl. der Darstellung der entsprechend bevorzugten Signalformen.

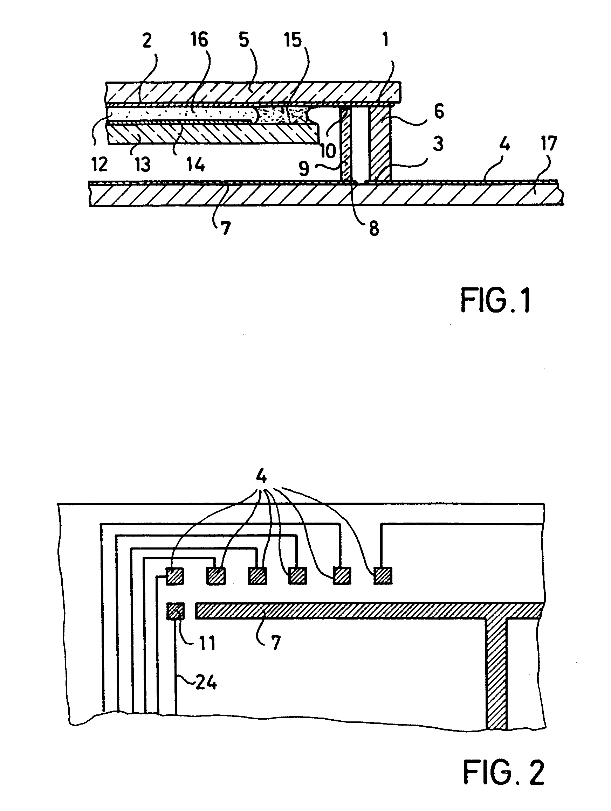

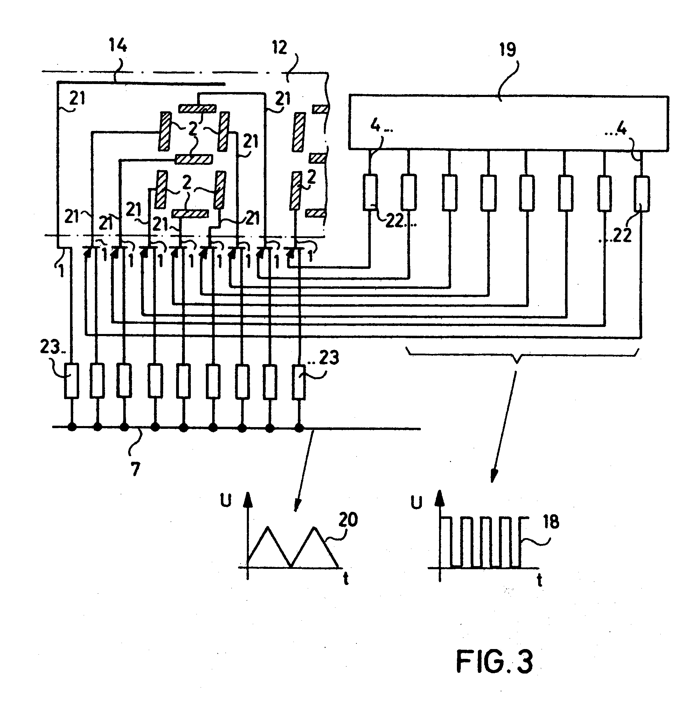

In der FIG. 1 ist schematisch das vereinfachte Prinzip einer LCD-Zelle 12 mit Signalzuführungsleitungen an ein Segment 2 gezeigt, welches grundsätzlich Gültigkeit hat auch für die Beschaltung aller übrigen Segment-Elektroden und Rückelektrodenanordnungen. Wie aus FIG. 1 erkennbar ist, besteht die LC-Zelle aus zwei parallel zueinander angeordneten Glasplatten 5 und 13. Die Innenflächen der Glasplatten sind mit transparenten Elektrodenschichten überzogen, die entsprechend der gewünschten Anzeigekonfiguration gestaltet sind, und es entstehen somit funktionsbezogen Segment-Elektroden 2 und Rückelektroden 14, die für eine Signalanlegung nach außerhalb der LC-Zelle 12 geführt sind. Der Plattenabstand zwischen den Glasplatten 5 und 13 wird durch einen Glaslotrahmen 15 bestimmt, der sich mit den Glasplatten 5 und 13 beispielsweise durch Erhitzen verbindet und den Zwischenraum der LC-Zelle 12 nach außen abdichtet. Die Zelle 12 wird durch eine Füllöffnung mit einem nematischen Flüssigkristall 16 gefüllt und danach hermetisch verschlossen. Die Segmentelektroden 2 und Rückelektroden 14 sind über getrennte, leitende Verbindungen mit einer entsprechenden Anzahl Display-Kontakten 1 außerhalb der LC-Zelle 12 verbunden. Um die LC-Anzeige in die Betriebsbereitschaft zu versetzen, ist eine Signalführung erforderlich, die durch Leiterbahnen 4 auf einer Leiterplatte 17 über Kontaktstellen 3, Leitgummiverbinder 6 an die Displaykontakte 1 verwirklicht ist. Beim Leitgummiverbinder 6 handelt es sich um einen anisotrop leitenden Verbinder, der die verfügbare Auflagefläche zu 40 % bis 60 % kontaktiert. Über die vorbezeichnete Signalführung gelangt ein Nutzsignal 18 (FIG. 3) von einer nicht näher bezeichneten Systemelektronik über eine LCD-Ansteuerung 19, über die Elemente 4, 3, 6, 1 (FIG. 1) an die Segmentelektrode 2. Treten hierbei Übertragungsfehler auf, so liegt deren Ursache im allgemeinen in Zuleitungsunterbrechungen und/oder Kontaktproblemen an den Übergangs-Kontaktstellen bei Position 1 und 3. Eine Unterbrechung der Signalführung bzw. der leitenden Verbindung vom Displaykontakt 1 zur Segmentelektrode 2 oder Rückelektrode 14 auf der Glasplatte 5 ist nur durch Glasbruch herbeiführbar und als solche erkennbar. Das bedeutet eine effektive Kontrolle der Signalführung konzentriert sich auf den Bereich der Signal-Zuleitungen. Die Zuführung der Nutzsignale 18 von der LCD-Ansteuerung 19 zur Segmentelektrode 2 erfolgt über die Leiterbahn 4, die Kontaktstelle 3, den Leitgummiverbinder 6, eine weitere Kontaktstelle am Übergang zum Displaykontakt 1 schließlich an die Segmentelektrode 2. Hierbei darf aufgrund der kapazitiven Wirkung der Segmentelektroden 2 zur Rückelektrode 14 (und umgekehrt) und aufgrund einer Signal-Wechselspannungs-Frequenz von f > 50 Hz der Zuleitungswiderstand über die Signalführungs-Positionen 4, 3, 6, 1 Größenordnungen von R_{H} < 100 kΩ nicht überschreiten, ohne daß Kontrastverlust eintritt.

Als Maßnahme für die Anzeige einer fehlerhaften Funktionsweise von Segment-, Segmentgruppen- und Rückelektroden-Zuleitungen an Standard-LCDs für eine statische oder gemultiplexte Betriebsweise wird an alle LCD-Elektroden 2, 14 ein redundant zugeführtes Kontrollsignal 20 angelegt, welches an Segment- 2 und Rückelektroden 14 angelegte Nutzsignale 18 überlagert, so daß im Falle einer Unterbrechung des Nutzsignales 18 das Kontrollsignal 20 an den betroffenen LCD-Elektroden 2, 14 wirksam wird, wodurch in der Folge das betroffene Segment 2 oder die betroffene Segmentgruppe 2 blinkt als wahrnehmbares Zeichen eines Störfalles.

Als Mittel zur Realisierung einer permanenten, visuellen Kontrollierbarkeit von Standard-LCDs dient eine Schaltungsanordnung, in der für das Anlegen eines separaten Kontrollsignals 20 eine hochohmige Zuleitung 7, 8, 9, 10 vorgesehen ist, die gemeinsam an alle LCD-Elektroden 2, 14 ohne Unterscheidung auf Segmentanschluß oder Rückelektrodenanschluß geführt ist. Entsprechend erfolgt eine Zufuhr des Kontrollsignals 20 gemäß dem Ausführungsbeispiel nach FIG. 1 über eine Leiterfläche 7 auf der Leiterplatte 17, eine Kontaktfläche 8, einen isotrop hochohmig leitenden Verbinder 9 und einer Kontaktfläche 10 an die Display-Kontakte 1. Die Elemente für die Führung der Kontrollsignale 20 unterscheiden sich wesentlich von den Elementen 4, 3, 6, 1 zur Übertragung der Nutzsignale 18 insbesondere dadurch, daß die Leiterfläche 7 großflächig ist und damit unterbrechungsfrei gestaltbar ist. Darüber hinaus verfügen die Kontaktflächen 8 und 10 über die gesamte Fläche der sich überdeckenden Kontaktstellen als nutzbare Kontaktzone, im Gegensatz beispielsweise zu den Leitgummiverbindern 6 im Bereich der Nutzsignalführung, die nur etwa zu 40 % bis 60 % kontaktieren. Schließlich ist der Verbinder 9 isotrop leitend, so daß hinsichtlich der Signalführung partielle Unterbrechungszonen in den Überleitungsbereichen der Kontaktflächen 8 oder 10 umgangen werden.

Die Kontrollsignalführung 20 über die Positionen 7, 8, 9, 10 an die Display-Kontakte 1 ist im Gegensatz zur Anlegung der Nutzsignale 18 über die Positionen 4, 3, 6 an die Display-Kontakte 1 um den Faktor 5 bis 100 hochohmiger und wird hierdurch zusätzlich zu den Unterschieden zur Nutzsignalkontaktierung unkritischer gegen indifferente Kontaktzustände. Darüber hinaus wird durch diese hochohmige Zuleitung des Kontrollsignals 20 die Nutzsignalführung nicht negativ beeinflußt.

Die Form des Kontrollsignals 20 ist vorzugsweise nicht ein Rechteck-Signal sondern ein Signal mit langen Flankenzeiten, dementsprechend eine Dreieck-, Sinus- oder e-Funktions-Form oder eine Mischform hieraus, welche unter allen vorkommenden Signalgegebenheiten an durch Störungen in den Zuleitungen betroffenen Segmenten 2 oder Segmentgruppen eine Kontrastbildung herbeiführt. Die Frequenz für das Kontrollsignal 20 liegt entsprechend im Bereich um ca. 0,5 bis 2 Hz.

Die vorbezeichnete Signalform führt auf jeden Fall zur Kontrastbildung an den gestörten Segmenten, da die zugehörige Rückelektrode im Falle einer Segment-Zuleitungs-Unterbrechung - und die zugehörige Segmentelektroden im Falle einer Rückelektroden-Zuleitungs-Unterbrechung - noch Nutzsignale 18 führt.

Tritt in den Zuleitungen für die Führung der Nutzsignale 18 eine Unterbrechung auf, die zumindest den Zuleitungs-Widerstand in die Größenordnung des Kontrollsignal- (20) Zuleitungs-Widerstandes bringt, erfolgt eine Überlagerung des Nutzsignals 18 durch das Kontrollsignal 20 (bis zu dessen Dominanz bei vollständiger Nutzsignalunterbrechung), derart, daß das gestörte Segment 2 hochohmig an das Kontrollsignal 20 angekoppelt ist und der Kontrast sich im (doppelten) Rhythmus des Kontrollsignals 20 (f_{K} ∼ 0,5 bis 2 Hz) ändert. Somit ist eine Unterbrechung des Nutzsignals 18 eindeutig visuell erkennbar.

Bedingt durch die niedrige Frequenz des Kontrollsignals 20, ist der Zuleitungswiderstand nur noch so klein zu halten, daß Leckströme (beispielsweise aufgrund einer Leiterplattenverschmutzung) das Kontrollsignal 20 nicht wesentlich schwächen, so daß sich Widerstandswerte von 5 MΩ > Rₖ > 470 kΩ ergeben.

In der FIG. 3 ist eine vereinfachte Ersatzschaltung für die Ansteuerung einer 7-SegmentKonfiguration zur Darstellung von Ziffern angegeben. Wie dort erkennbar ist, sind die Segmentelektroden 2 über Leitungen 21 nach außerhalb der LC-Zelle 12 geführt und dort mit geeigneten Display-Kontakten 1 versehen. Über den Ausgang der LCD-Ansteuerung 19 werden die Nutzsignale 18 über getrennte Leiterbahnen 4, ein Widerstandselement 22 an die Display-Kontakte 1 der einzelnen Segmentelektroden 2 bzw. Rückelektroden 14 angelegt. Das Widerstandselement 22 symbolisiert den Zuleitungswiderstand R_{H} < 100 kΩ über die Elemente Leiterbahn 4, Kontaktstelle 3, Leitgummiverbinder 6 zum Display-Kontakt 1. Die Signalform des Nutzsignals 18 ist dargestellt als symmetrisches Rechteck-Spannungssignal mit einer Frequenz von f > 50 Hz.

Im Gegensatz hierzu ist, wie in FIG. 3 angedeutet, als bevorzugte Signalform für das Kontrollsignal 20 ein Signal mit langer Flankenzeit und niedriger Frequenz um ca. 0,5 bis 2 Hz angezeigt. Das Kontrollsignal 20 wird über eine gemeinsame Leiterfläche 7, einen hochohmigen, isotrop leitenden Verbinder 9 und die Kontaktfläche 10 an die Display-Kontakte 1 geführt. Die hochohmige Charakteristik dieser Zuführleitung für die Kontrollsignale 18 an die Display-Kontakte 1 ist symbolisiert durch einen Widerstand 23.

Die Zufuhr des Kontrollsignals 20 kann gemäß einer weiteren Ausgestaltung statt über die Verwendung des Elementes 9 (isotrop-leitenden Verbinder) über Dickschichtwiderstände 23, welche direkt auf die Display-Anschlußflächen aufgetragen sind, erfolgen. Hierbei ist eine hochohmige Paste mit großen Toleranzen verwendbar.

Das Kontrollsignal 20 kann zur Überprüfung auf Funktion an einer Stelle abgegriffen werden, die sicherstellt, daß der Verbinder 9 oder die Dickschichtwiderstände 23 mit dem Kontrollsignal 20 beaufschlagt sind. Ein solcher Abgriff kann für einen Verbinder 9, wie in FIG. 2 gezeigt ist, als zusätzliche Kontaktfläche 11 auf der Leiterbahn 17 ausgebildet sein und an einen Eingang eines das System und/oder die Anzeige steuernden, nicht näher gezeigten Mirkoprozessors geschaltet werden, der die Funktionsüberwachung autonom-elektrisch wahrnimmt.

Zur Erzeugung des Kontrollsignals 20 kann sowohl ein autonomer Signal-Spannungsgenerator (z. B. RC-Generator) als auch ein Frequenzteiler, der seine Grundfrequenz von einer anderen Signalquelle als die der LCD-Ansteuerung bezieht, betrieben werden. Zur Erzeugung der langen Flankenzeiten der Kontrollsignale 20 genügt ein Tiefpaß erster Ordnung (RC-Tiefpaß), dessen Zeitkonstante etwa reziprok-proportional der Kontrollsignal-Frequenz ist.

## Patentansprüche

1. Verfahren zur Anzeige einer fehlerhaften Funktionsweise von Segment-, Segmentgruppen- und Rückelektroden-Zuleitungen an Standard-Flüssigkristall-Anzeigen (LCD's) für eine statische oder gemultiplexte Betriebsweise zur Darstellung von Ziffern oder Zeichen über die Aktivierung einer Anzahl getrennt ansteuerbarer Segmente, wobei an alle LCD-Elektroden (2, 14) ein redundant zugeführtes Kontrollsignal (20) angelegt ist,
dadurch gekennzeichnet,
daß eine Führung des Kontrollsignals (20) über erste Positionen (7, 8, 9, 10) an Display-Kontakte (1) ohne Unterscheidung auf Segmentanschluß oder Rückelektrodenanschluß im Gegensatz zur Anlegung von Nutzsignalen (18) über zweite Positionen (4, 3, 6) an die Display-Kontakte (1) um den Faktor 5 bis 100 hochohmiger ist,
daß als Form des Kontrollsignals (20) eine Dreieck-, Sinus- oder e-Funktionsform gewählt wird, welche unter allen vorkommenden Signalgegebenheiten an durch Störungen in den Zuleitungen betroffenen Segmenten (2) oder Segmentgruppen eine Kontrastbildung herbeiführt, und
daß das Kontrollsignal (20) an Segment- (2) und Rückelektroden (14) angelegte Nutzsignale (18) überlagert, derart daß im Falle einer Unterbrechung des Nutzsignals (18) das Kontrollsignal (20) an den betroffenen LCD-Elektroden (2, 14) wirksam wird, wodurch in der Folge das betroffene Segment (2) oder die betroffene Segmentgruppe (2) blinkt als wahrnehmbares Zeichen eines Störfalles.

2. Schaltungsanordnung zur Anzeige einer fehlerheften Funktionsweise von Segment-, Segmentgruppen- und Rückelektroden-Zuleitungen an Standard-Flüssigkristall-Anzeigen (LCD's) für eine statische oder gemultiplexte Betriebsweise zur Darstellung von Ziffern oder Zeichen über die Aktivierung einer Anzahl getrennt ansteuerbarer Segmente, wobei an alle LCD-Elektroden (2, 14) ein redundant zugeführtes Kontrollsignal (20) angelegt ist,
dadurch gekennzeichnet,
daß für das Anlegen eines separaten Kontrollsignals (20) eine gegenüber dem Anlegen der Nutzsignale (18) über zweite Positionen (4, 3, 6) an die Display-Kontakte (1) um den Faktor 5 bis 100 hochohmigere Zuleitung über erste Positionen (7, 8, 9, 10) vorgesehen ist, die gemeinsam an alle LCD-Elektroden (2, 14) ohne Unterscheidung auf Segmentanschluß oder Rückelektrodenanschluß geführt ist und in der vorzugsweise ein hochohmiger, homogen leitender Verbinder (9) vorgesehen ist zur Signalführung des redundant zugeführten Kontrollsignals (20).

3. Schaltungsanordnung nach Anspruch 2,
dadurch gekennzeichnet,
daß in der hochohmigen Zuleitung (7 bis 10) für das Anlegen des Kontrollsignals (20) eine Anordnung von Dickschicht-Widerständen (23) vorgesehen ist, wobei letztere direkt auf die LC-Displaykontakte (1) aufgetragen sind.

4. Schaltungsanorndung nach Anspruch 2,
dadurch gekennzeichnet,
daß an beliebiger Stelle der leiterplattenseitigen Kontaktgabe im Überdeckungs-Bereich des Verbinders (9) eine zusätzliche Kontaktfläche (11) mit Rückführungsleitung (24) vorgesehen ist zur Anwesenheitskontrolle des Kontrollsignals (20) über den isotrop leitenden Verbinder (9).

## Claims

1. Process for indicating a faulty functioning mode of segment, segment group and back electrode connection lines in standard liquid crystal displays (LCDs) for a static or multiplexed operating mode for the display of numbers or symbols by the activation of a number of separately drivable segments, a redundantly supplied checking signal (20) being applied to all LCD electrodes (2,14), characterised in that the checking signal (20) is supplied via first positions (7,8,9,10) to display contacts (1), without differentiation between segment connection and back electrode connection, at a resistance which is higher by a factor of 5 to 100 than the application of useful signals (18) via second positions (4,3,6) to the display contacts (1), in that the waveform of the checking signal (20) is selected as a triangular, sine or exponential function waveform which causes formation of contrast at segments (2) or segment groups affected by faults in the connection lines under all signal conditions arising, and in that the checking signal (20) is superposed on useful signals (18) applied to segment (2) and back electrodes (14) in such a manner that, in the event of an interruption of the useful signal (18), the checking signal (20) becomes effective at the LCD electrodes (2,14) affected, as a result of which subsequently the affected segment (2) or the affected segment group (2) will flash as an observable sign of a fault condition.

2. Circuit arrangement for indicating a faulty functioning mode of segment, segment group and back electrode connection lines in standard liquid crystal displays (LCDs) for a static or multiplexed operating mode for the display of numbers or symbols by the activation of a number of separately drivable segments, a redundantly supplied checking signal (20) being applied to all LCD electrodes (2,14), characterised in that, for applying a separate checking signal (20), a connection line is provided via first positions (7,8,9,10) which is of a resistance which is higher by a factor of 5 to 100 than the application of the useful signals (18) via second positions (4,3,6) to the display contacts (1) and is supplied in common to all LCD electrodes (2,14) without differentiation between segment connection and back electrode connection, and a high-resistance homogeneously conducting connector (9) is preferably provided in this connection line for supplying the redundantly supplied checking signal (20).

3. Circuit arrangement in accordance with claim 2, characterised in that, in the high-resistance connection line (7 to 10) for applying the checking signal (20), an arrangement of thick film resistors (23) is provided, the latter being applied directly on the LC display contacts (1).

4. Circuit arrangement in accordance with claim 2, characterised in that, at any position on the printed circuit side of the contact in the overlap region of the connector (9), there is provided an additional contact surface (11) with feedback line (24) for checking the presence of the checking signal (20) via the isotropically conducting connector (9).

## Revendications

1. Procédé pour la signalisation d'un mode de fonctionnement défectueux de lignes électriques d'amenée de segments, de groupes de segments et d'électrodes de retour connectées à des afficheurs à cristaux liquides standards (LCD) pour un mode de fonctionnement statique ou multiplexé en vue de l'affichage de chiffres ou de caractères par l'intermédiaire de l'activation d'un nombre de segments pouvant être attaqués séparément, un signal de contrôle (20) acheminé avec redondance étant appliqué à toutes les électrodes LCD (2, 14),
caractérisé par le fait
qu'un acheminement du signal de contrôle (20), par l'intermédiaire de premières positions (7, 8, 9, 10), à des contacts d'afficheur (1) sans distinction qu'il s'agisse de la connexion de segment ou de la connexion d'électrode de retour présente, contrairement à l'application de signaux utiles (18), par l'intermédiaire de deuxièmes positions (4, 3, 6), aux contacts d'afficheur (1), une résistance ohmique plus élevée du facteur 5 à 100,
que, comme forme du signal de contrôle (20), il est prévue une forme de fonction triangulaire, sinusoïdale ou exponentielle qui produit, quelles que soient les conditions de signal existantes, une formation de contraste sur des segments (2) ou groupes de segments affectés par des perturbations dans les lignes électriques d'amenée, et
que le signal de contrôle (20) se superpose à des signaux utiles (18) appliqués à des électrodes de segment (2) et des électrodes de retour (14), de telle sorte que, dans le cas d'une interruption du signal utile (14), le signal de contrôle (20) devienne efficace aux électrodes LCD concernées (2, 14), ce qui aura, par la suite, comme conséquence que le segment correspondant (2) ou le groupe de segments correspondant (2) clignote comme signalisation perceptible d'un cas de panne.

2. Arrangement de circuits pour la signalisation d'un mode de fonctionnement défectueux de lignes électriques d'amenée de segments, de groupes de segments et d'électrodes de retour connectées à des afficheurs à cristaux liquides standards (LCD) pour un mode de fonctionnement statique ou multiplexé en vue de l'affichage de chiffres ou de caractères par l'intermédiaire de l'activation d'un nombre de segments pouvant être attaqués séparément, un signal de contrôle (20) acheminé avec redondance étant appliqué à toutes les électrodes LCD (2, 14),
caractérisé par le fait
qu'il est prévu, pour l'application d'un signal de contrôle (20) séparé, par l'intermédiaire de premières positions (7, 8, 9, 10), une ligne électrique d'amenée qui, par rapport à l'application des signaux utiles (18), par l'intermédiaire de deuxièmes positions (4, 3, 6), aux contacts d'afficheur (1), présente une résistance ohmique plus élevée du facteur 5 à 100, qui est acheminée, sans distinction qu'il s'agisse de la connexion de segment ou de la connexion d'électrode de retour, conjointement à toutes les électrodes LCD (2, 14) et dans laquelle est prévu, de préférence, un connecteur (9) à conduction homogène, de haute résistance ohmique, pour l'acheminement du signal de contrôle (20) transféré avec redondance.

3. Arrangement de circuits selon la revendication 2,
caractérisé par le fait
que, dans la ligne électrique d'amenée à haute résistance ohmique (7 à 10), il est prévu, pour l'application du signal de contrôle (20), un arrangement de résistances à couche épaisse (23), ces dernières étant appliquées directement aux contacts d'afficheur à cristaux liquides (1).

4. Arrangement de circuits selon la revendication 2,
caractérisé par le fait
que, à un endroit quelconque de l'établissement de contact du côté de la platine à circuits imprimés, dans la zone de superposition du connecteur (9), il est prévu une surface de contact supplémentaire (11) avec ligne électrique de retour (24) pour le contrôle de présence du signal de contrôle (20) par l'intermédiaire du connecteur (9) à conduction isotrope.
